(19) **Europäisches Patentamt / European Patent Office / Office européen des brevets**

(11) **EP 4 738 515 A1**

(12) # EUROPEAN PATENT APPLICATION
published in accordance with Art. 153(4) EPC

(43) Date of publication:
**06.05.2026 Bulletin 2026/19**

(21) Application number: **23943478.0**

(22) Date of filing: **26.12.2023**

(51) International Patent Classification (IPC):
**H01M 10/0567** $^{(2010.01)}$    **H01M 10/0525** $^{(2010.01)}$
**H01M 10/42** $^{(2006.01)}$

(52) Cooperative Patent Classification (CPC):
**Y02E 60/10**

(86) International application number:
**PCT/CN2023/141923**

(87) International publication number:
**WO 2025/001007 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.06.2023   CN 202310791633**

(71) Applicant: **Sunwoda Mobility Energy Technology
Co., Ltd.
Shenzhen, Guangdong 518107 (CN)**

(72) Inventors:
• **LV, Guoxian
  Shenzhen, Guangdong 518107 (CN)**
• **QIAO, Feiyan
  Shenzhen, Guangdong 518107 (CN)**

(74) Representative: **Meyer, Thorsten
Meyer Patentanwaltskanzlei
Pfarrer-Schultes-Weg 14
89077 Ulm (DE)**

(54) **LITHIUM-ION SECONDARY BATTERY AND ELECTRIC APPARATUS**

(57)    Provided herein is a lithium-ion secondary battery and an electrical apparatus. In this disclosure, parameters related to an anode and an electrolyte of the lithium-ion secondary battery are reasonably designed, such that the lithium-ion secondary battery satisfies a relationship: $6.7 \leq CB \times PD / (\eta \times A) \leq 160$, where CB represents a capacity excess coefficient of the lithium-ion secondary battery; A represents a mass percentage of the DTD in the electrolyte; PD represents a compaction density of the anode active material layer; $\eta$ represents a viscosity of the electrolyte.

EP 4 738 515 A1

**Description**

**CROSS-REFERENCE TO RELATED APPLICATION**

This disclosure claims the benefit of Chinese patent application No. 202310791633.8, filed on June 29, 2023, which is incorporated herein by reference in its entirety.

**TECHNICAL FIELD**

This disclosure relates to the field of battery technology, particularly to a lithium-ion secondary battery and an electrical apparatus.

**BACKGROUND**

Lithium-ion secondary batteries have outstanding characteristics such as high specific energy, long lifespan, environmental friendliness, and no memory effect, and are widely used in portable electronic apparatus and new energy vehicles. However, the widespread adoption of new energy vehicles has been limited by their driving range. One approach to increase the driving range is to reduce the charging time of the batteries. Therefore, providing a lithium-ion secondary battery with excellent fast-charging performance is a problem that needs to be solved.

**SUMMARY**

An objective of this disclosure is to provide a lithium-ion secondary battery with excellent fast-charging performance. In this disclosure, parameters related to an anode and an electrolyte of the lithium-ion secondary battery are reasonably designed, to significantly improve the fast-charging performance and cycle performance of the lithium-ion secondary battery.

To achieve the above objective, in a first aspect, provided herein is a lithium-ion secondary battery, comprising a cathode, an anode, an electrolyte, and a separator, wherein the anode comprises an anode current collector and an anode active material layer arranged on at least one surface of the anode current collector; the electrolyte comprises an organic solvent, a lithium salt, and an additive; the additive comprises 1,3,2-dioxathiolane-2,2-dioxide (DTD);

the lithium-ion secondary battery satisfies a relationship as follows:

$$6.7 \leq CB \times PD/(\eta \times A) \leq 160,$$

wherein CB represents a capacity excess coefficient of the lithium-ion secondary battery, which is a ratio of an anode capacity to a cathode capacity under the same area (i.e., negative-to-positive capacity ratio per unit area, also referred to as N/P ratio);

A represents a mass percentage of the DTD in the electrolyte;

PD represents a compaction density of the anode active material layer in g/cm$^3$; and
$\eta$ represents a viscosity of the electrolyte at 25°C in mPa·s.

In some embodiments, the lithium-ion secondary battery satisfies a relationship as follows: $14 \leq CB \times PD/(\eta \times A) \leq 62$.

In some embodiments, the CB is 1 to 1.6.

In some embodiments, the A is 0.5% to 3%.

In some embodiments, the PD is 1 g/cm$^3$ to 2 g/cm$^3$.

In some embodiments, the $\eta$ is 2 mPa·s to 5 mPa·s.

In some embodiments, in the anode active material layer, the anode active material comprises at least one of graphite, soft carbon, hard carbon, a silicon-based material, a tin-based material, or lithium titanate.

In some embodiments, in the anode active material layer, $D_{V50}$ of the anode active material is 5 $\mu$m to 30 $\mu$m, and $D_{V50}$ is a particle size at which a cumulative volume distribution percentage of the anode active material reaches 50%.

In some embodiments, in the anode active material layer, an oil absorption value (i.e., DBP value) of the anode active material is 10 mL/100g to 100 mL/100g.

In some embodiments, a total mass m of the electrolyte in the lithium-ion secondary battery and a rated capacity cap of the lithium-ion secondary battery satisfy: m/cap = 1.5 g/Ah to 5 g/Ah.

In some embodiments, in the electrolyte, the organic solvent comprises at least one of cyclic carbonate, linear carbonate, or carboxylic ester.

In some embodiments, in the electrolyte, the lithium salt comprises at least one of lithium hexafluorophosphate, lithium bis(fluorosulfonyl)imide, lithium bis(oxalate)borate, lithium difluoroborate, or lithium tetrafluoro(oxalato)borate.

In some embodiments, in the electrolyte, the additive further comprises at least one of vinylene carbonate, 1,3-propanesultone, fluoroethylene carbonate, tris(trimethylsilyl) phosphate, or lithium difluorophosphate.

In a second aspect, provided herein is an electrical apparatus, comprising the lithium-ion secondary battery.

Compared with the prior art, this disclosure has the following beneficial effects:

In this disclosure, the parameters related to the anode and the electrolyte of the lithium-ion secondary battery are reasonably designed. Specifically, by controlling the capacity excess coefficient of the battery, the compaction density of the anode, and related parameters of the electrolyte according to a specific relational formula, a calculated value from this formula is made to fall within a specific range, such that poor ion diffusion caused by battery polarization during fast charging or thick electrodes can be avoided, thereby ultimately improving the cycle performance, fast charging performance, and kinetic performance of the battery. Consequently, the fast-charging performance of the lithium-ion secondary battery is significantly improved.

## DETAILED DESCRIPTION

To better illustrate the objective, technical solution and advantages of this disclosure, the following embodiments are provided to illustrate this disclosure, but are not intended to limit the scope of this disclosure in any form. Unless otherwise specified, the reagents, methods and equipment used in this disclosure are conventional reagents, methods and equipment in the technical field. Unless otherwise specified, the reagents and materials used in this disclosure are purchased from the market.

In some embodiments of this disclosure, provided herein is a lithium-ion secondary battery, comprising a cathode, an anode, an electrolyte, and a separator, wherein the anode comprises an anode current collector and an anode active material layer arranged on at least one surface of the anode current collector; the electrolyte comprises an organic solvent, a lithium salt, and an additive; the additive comprises DTD;

the lithium-ion secondary battery satisfies a relationship as follows:

$$6.7 \leq CB \times PD/(\eta \times A) \leq 160,$$

wherein CB represents a capacity excess coefficient of the lithium-ion secondary battery, which is a ratio of an anode capacity to a cathode capacity under the same area;

A represents a mass percentage of the DTD in the electrolyte;

PD represents a compaction density of the anode active material layer in g/cm³; and

$\eta$ represents a viscosity of the electrolyte at 25°C in mPa·s.

During a charging process of the lithium-ion secondary battery, lithium ions are released from the cathode, accompanied by a liquid-phase diffusion of the electrolyte in a porous electrode of the anode and the charge exchange on the surface of the anode active material. Subsequently, lithium ions conduct through solid-state transmission within anode active material particles. Therefore, the anode and the electrolyte play an important role in improving the fast charging performance of the lithium-ion secondary battery.

The inventors of this disclosure have discovered through extensive research that by controlling the viscosity of the electrolyte, the mass percentage of DTD in the electrolyte, the capacity excess coefficient of the battery, and the compaction density of the anode, and making a relationship among these parameters within a specific range, such that battery polarization during fast charging and poor ion diffusion caused by thick electrodes can be avoided, thereby ultimately improving the cycle performance, fast charging performance, and kinetic performance of the battery. Consequently, the fast-charging performance of the lithium-ion secondary battery is significantly improved, thereby greatly shortening the charging time of the battery.

In some embodiments of this disclosure, a value of CB × PD / ($\eta$ × A) can be any one selected from the group consisting of 6.7, 7, 9, 10, 12, 14, 20, 25, 30, 35, 40, 45, 50, 55, 62, 70, 75, 80, 90, 100, 123, 140, 148, 152, and 160, or a range composed of any two values therein, such as a range of 10 to 123, 20 to 55, 30 to 50, or 35 to 45.

In some embodiments of this disclosure, when the lithium-ion secondary battery satisfies $14 \leq CB \times PD / (\eta \times A) \leq 62$, it has better fast charging performance, as well as a longer cycle life.

In some embodiments of this disclosure, the capacity excess coefficient of the lithium-ion secondary battery (CB) is selected within a range of 1 to 1.6. During charging and discharging of the battery, active ions are released from the cathode and embedded in the anode, the capacity excess coefficient represents a relationship between a receivable capacity of the anode and a releasable capacity of the cathode. When the CB is within this range, the proportion of the anode active material is optimized, which reduces the likelihood of lithium deposition on the anode surface, thus avoiding capacity attenuation and a decline in the cycle performance of the battery; and lithium ions have good liquid transmission ability in the anode, which is conducive to the fast charging performance of the lithium-ion secondary battery.

The capacity excess coefficient of the lithium-ion secondary battery (CB) is a ratio of an anode capacity to a cathode capacity under the same area. Its value can be measured by using existing technical methods, such as assembling a cathode and an anode with the same area and lithium sheets into a button battery respectively, then using a LAND battery tester to measure the charging capacities, to obtain the cathode capacity and the anode capacity. In some embodiments of this disclosure, the value of the CB can be any one selected from the group consisting of 1.0, 1.1, 1.15, 1.2, 1.24, 1.3, and 1.6, or a range composed of any two values therein, such as a range of 1.1 to 1.5, 1.05 to 1.4, or 1.1 to 1.4.

In some embodiments of this disclosure, the compaction density of the anode active material layer (PD) is within a range of 1 $g/cm^3$ to 2 $g/cm^3$. An appropriate compaction density of the anode active material layer allows it to be fully infiltrated by the electrolyte, facilitating the charge exchange of lithium ions on the surface of the anode active material and the liquid-phase transmission of lithium ions within the pores of the anode, thereby improving the charging speed of the battery.

In this disclosure, the compaction density of the anode active material layer (PD) can be measured by the following method: an anode with an area of a $cm^2$ is weighed and a mass thereof is recorded as M g, then an anode current collector with the same area is weighed and a mass thereof is recorded as m g. The thickness of the anode is measured and recorded as D cm, and the thickness of the anode current collector is measured and recorded as d cm. The compaction density of the anode active material layer can be calculated according to a formula $PD = (M - m) / [a \times (D - d)]$. In some embodiments of this disclosure, a value of PD can be any one selected from the group consisting of 1.0 $g/cm^3$, 1.1 $g/cm^3$, 1.2 $g/cm^3$, 1.5 $g/cm^3$, 1.6 $g/cm^3$, 1.7 $g/cm^3$, 1.8 $g/cm^3$, and 2.0 $g/cm^3$, or a range composed of any two values therein, such as a range of 1.3 $g/cm^3$ to 1.9 $g/cm^3$, 1.2 $g/cm^3$ to 1.8 $g/cm^3$, 1.4 $g/cm^3$ to 1.8 $g/cm^3$, or 1.5 $g/cm^3$ to 1.8 $g/cm^3$.

In some embodiments of this disclosure, the viscosity of the electrolyte at 25°C ($\eta$) is within a range of 2 mPa·s to 5 mPa·s. An electrolyte with an appropriate viscosity has certain oxidation resistance, and does not decompose easily at a high temperature, thus preventing gas expansion. Meanwhile, an electrolyte with an appropriate viscosity has good wettability, which can improve the fast charging performance of the battery. Moreover, an electrolyte with an appropriate viscosity can further reduce the heat generated during the charge and discharge cycles of the battery, and improve the cycle life thereof. It is understood that the viscosity of the electrolyte can be regulated by adjusting composition thereof.

In this disclosure, the viscosity of the electrolyte can be measured using a 1835 Ostwald viscometer. In some embodiments of this disclosure, a value of $\eta$ (in mPa·s) can be any one selected from the group consisting of 2 mPa·s, 3.1 mPa·s, 3.2 mPa·s, 4 mPa·s, 4.1 mPa·s, 4.2 mPa·s, 4.3 mPa·s, 4.4 mPa·s, 4.5 mPa·s, 4.7 mPa·s, and 5 mPa·s, or a range composed of any two values therein, such as a range of 2 mPa·s to 4 mPa·s, 2 mPa·s to 4.5 mPa·s, or 4 mPa·s to 4.5 mPa·s.

In some embodiments of this disclosure, a mass percentage of DTD in the electrolyte is 0.5% to 3%. For example, the mass percentage of DTD in the electrolyte can be any one selected from the group consisting of 0.5%, 1%, 1.5%, 2%, 2.5%, and 3%, or a range composed of any two values therein. When the mass percentage of DTD is within this range, it can improve the cycle performance of the battery while ensuring the fast charging performance thereof.

In this disclosure, the mass percentage of DTD is measured by gas chromatography: a series of standard solutions of DTD with different concentrations are prepared by using dimethyl carbonate as a solvent. The standard solutions of DTD are measured by using a gas chromatograph from low concentration to high concentration, then an integrating is performed to obtain the peak area, and the peak area corresponds to the concentration of DTD. A standard curve is drawn according to a relationship between the peak area and the concentration of DTD. When testing a mass percentage of DTD in an electrolyte sample, a measured peak area of the sample is compared with the peak area in the standard curve, to obtain the mass percentage of DTD.

The capacity excess coefficient of the lithium-ion secondary battery (CB), the compaction density of the anode active material layer (PD), the viscosity of the electrolyte ($\eta$), and the mass percentage of DTD in the electrolyte (A) jointly affect the fast charging performance and cycle performance of the lithium-ion battery.

Therefore, to meet the requirements of fast charging and long service life of the battery, controlling the capacity excess coefficient of the lithium-ion secondary battery (CB), the compaction density density of the anode active material layer (PD), the viscosity of the electrolyte ($\eta$), and the mass percentage of DTD (A) within a relationship of $6.7 \le CB \times PD / (\eta \times A) \le 160$ can ensure the cycle performance while meeting the fast charging requirements.

In some embodiments of this disclosure, an anode active material in the anode active material layer comprises at least one of graphite, soft carbon, hard carbon, a silicon-based material, a tin-based material, or lithium titanate.

In some embodiments of this disclosure, a particle size $D_{V50}$ of the anode active material is 5 $\mu$m to 30 $\mu$m. In this disclosure, when a value of the particle size $D_{V50}$ of the anode active material is within this range, it is conducive to the rapid diffusion of lithium ions in the anode active material, and $D_{V50}$ is a particle size at which a cumulative volume distribution percentage of the anode active material reaches 50%.

In some embodiments of this disclosure, an oil absorption value (i.e., DBP value) of the anode active material is 10 mL/100g to 100 mL/100g. When the oil absorption value of the anode active material is within this range, it is conducive to reducing the contact impedance between the material and the electrolyte, further improving the kinetic performance.

In this disclosure, the oil absorption value (DBP value) of the anode active material can be measured through the following method: the weighed anode active material is added to a mixing chamber of an oil absorption meter, and the mixing chamber is covered with a lid; an oil delivery tube outlet of a constant-speed burette is aligned above an opening of the lid, and a counter of the constant-speed burette is set as zero, ensuring that there are no bubbles in the oil delivery tube. The oil absorption meter is started, begins to operate and drops an oil (DBP, i.e., dibutyl phthalate, used as a solvent). When the dropped oil causes semi-plastic agglomerates (i.e., a mixture of the anode active material and the dropped oil) to reach a preset torque level, the oil absorption meter and the constant-speed burette are simultaneously turned off. The oil absorption value of the anode active material is defined as a ratio of a volume of added DBP to the mass of the weighed anode active material. In some embodiments of this disclosure, the oil absorption value (DBP value) of the anode active material can be any one selected from the group consisting of 10 mL/100g, 20 mL/100g, 30 mL/100g, 40 mL/100g, 50 mL/100g, 60 mL/100g, 70 mL/100g, 80 mL/100g, 90 mL/100g, and 100 mL/100g, or a range composed of any two values therein, such as a range of 20-90 mL/100g, 30-80 mL/100g, 40-70 mL/100g, or 50-60 mL/100g.

In some embodiments of this disclosure, a cathode active material in the cathode comprises at least one of lithium iron phosphate, lithium manganese iron phosphate, lithium nickel cobalt manganese oxide, lithium nickel cobalt aluminum oxide, lithium nickel manganese oxide, lithium cobalt oxide, lithium-rich manganese-based solid solution, or lithium manganese oxide.

In some embodiments of this disclosure, a ratio m/cap of the total mass m of the electrolyte within the lithium-ion secondary battery to the rated capacity cap of the battery is 1.5 g/Ah to 5 g/Ah. When the ratio m/cap is within the above range, it can improve the wetting effect of the electrolyte toward the cathode and the anode, provide a lithium ion migration path, and facilitate the improvement of the kinetic performance.

In some embodiments of this disclosure, the ratio m/cap of the total mass m of the electrolyte within the lithium-ion secondary battery to the rated capacity cap of the battery can be any one selected from the group consisting of 1.5 g/Ah, 2 g/Ah, 2.5 g/Ah, 3 g/Ah, 3.5 g/Ah, 4 g/Ah, 4.5 g/Ah, and 5 g/Ah, or a range composed of any two values therein, such as a range of 1.5-4 g/Ah, 2-5 g/Ah, or 3-5 g/Ah.

In some embodiments of this disclosure, the organic solvent comprises at least one of cyclic carbonate, linear carbonate, or carboxylic ester. The cyclic carbonate comprises at least one of ethylene carbonate, propylene carbonate, butylene carbonate, or γ-butyrolactone. The linear carbonate comprises at least one of dimethyl carbonate, diethyl carbonate, ethyl methyl carbonate, or methyl propyl carbonate. The carboxylic ester comprises at least one of ethyl acetate, propyl propionate, ethyl butyrate, ethyl propionate, or propyl butyrate.

In some embodiments of this disclosure, the lithium salt comprises at least one of lithium hexafluorophosphate, lithium bis(fluorosulfonyl)imide, lithium bis(oxalate)borate, lithium difluoro(oxalato)borate, or lithium tetrafluoro(oxalato) borate.

In some embodiments of this disclosure, the lithium salt comprises hexafluorophosphate lithium, and at least one of lithium bis(fluorosulfonyl)imide, lithium bis(oxalate)borate, lithium difluoro(oxalato)borate, or lithium tetrafluoro(oxalato)borate. When the electrolyte comprises the above lithium salts, it can ensure the transfer of lithium ions, and further improve the kinetic performance during high-rate fast charging.

In some embodiments of this disclosure, the lithium salt comprises lithium hexafluorophosphate and lithium bis(fluorosulfonyl)imide.

In some embodiments of this disclosure, in addition to DTD (i.e., the first additive), the electrolyte may further comprise a second additive. The second additive comprises tris(trimethylsilyl) phosphate (TMSP), and at least one of vinylene carbonate (VC), 1,3-propanesultone (PS), fluoroethylene carbonate (FEC), or lithium difluorophosphate (LiDFP). When the electrolyte comprises the second additive, it can further improve the kinetic performance.

In some embodiments of this disclosure, based on the total mass of the electrolyte, a mass percentage of the second additive is 0.1% to 5%.

In some embodiments of this disclosure, the second additive comprises tris(trimethylsilyl) phosphate (TMSP).

In some embodiments of this disclosure, based on the total mass of the electrolyte, the mass percentage of the second additive is 0.1% to 1%.

In some embodiments of this disclosure, a ratio of a mass percentage of DTD in the electrolyte to a mass percentage of TMSP in the electrolyte is 0.05 to 0.5.

In some embodiments of this disclosure, a material of a separator is not specifically limited and can be any separator material used in existing batteries, such as polyethylene, polypropylene, polyvinylidene fluoride, or multilayer composite membranes thereof.

This disclosure also provides an electrical apparatus comprising the above lithium-ion secondary battery.

The following are specific examples of this disclosure, and the technical solutions of this disclosure are further described in combination with the examples. However, this disclosure is not limited to these examples. Unless otherwise specified, the reagents, methods and equipment used in this disclosure are conventional reagents, methods and equipment in the technical field.

Example 1

A lithium-ion secondary battery with a rated capacity of 120 Ah was provided in Example 1, the preparation method thereof comprised the following steps:

Preparation of a cathode

A cathode active material (NCM613), a conductive agent (acetylene black), and a binder (polyvinylidene fluoride) were mixed in a mass ratio of 96:2:2; a NMP solvent was added, a resulting mixture was stirred in vacuum and dispersed until a uniform slurry system was obtained. The slurry was applied onto a cathode current collector (aluminum foil), dried in an oven, then cold-pressed and cut to obtain the cathode.

Preparation of an anode

An anode active material (graphite, with $D_{V50}$ of 10 $\mu$m and an oil absorption value of 60 mL/100g), a conductive agent (acetylene black), a thickener (sodium carboxymethyl cellulose), and a binder (styrene-butadiene rubber) were mixed in a mass ratio of 96.2:1:1.4:1.4. An appropriate amount of deionized water was added, a resulting mixture was fully stirred in vacuum to obtain an anode slurry. The anode slurry was applied onto an anode current collector (copper foil), dried in an oven, then cold-pressed and cut to obtain the anode.

Preparation of an electrolyte

In an argon atmosphere, ethylene carbonate, ethyl methyl carbonate, and diethyl carbonate were mixed in a mass ratio of 3:5:2 evenly to obtain a mixed solvent. Then, a fully dried lithium hexafluorophosphate was added to the mixed solvent, and subsequently DTD was added, a resulting mixture was stirred evenly to obtain the electrolyte. In this electrolyte, a mass percentage of lithium hexafluorophosphate was 12.5%, a mass percentage of DTD was 2%, and a viscosity of the electrolyte was 4 mPa·s.

Assembly of a Lithium-ion secondary battery

The prepared cathode, a separator (polyethylene membrane), and the anode were stacked in sequence, with the separator placed between the cathode and the anode to separate the two. Then, a stacked production was wound to obtain a bare cell. The bare cell was placed in an outer packaging shell, dried, and injected with 360 g of the electrolyte. After vacuum sealing, static standing, formation, and shaping, the lithium-ion secondary battery was obtained.

Examples 2-29 and Comparative Examples 1-2

The lithium-ion secondary batteries of Examples 2-29 and Comparative Examples 1-2 were prepared according to the method of Example 1. The differences were shown in Table 1.

Examples 30-33

The difference between Examples 30-33 and Example 1 lay in the injection amounts of the electrolyte. Refer to Table 1 for details.

Examples 34-38

The difference between Examples 34-38 and Example 1 lay in that the additive in the electrolyte further comprised tris(trimethylsilyl)phosphate (TMSP). The addition amounts of TMSP were shown in Table 2.

The lithium-ion secondary batteries prepared in above examples and comparative examples were tested for the fast charging performance and long cycle performance. The test steps were as follows:

    1. fast charging performance: at 25°C, the lithium-ion batteries prepared in examples and comparative examples were charged to 4.4V at a 4C rate, fully discharged to 2.8V at a 1C rate, repeating 10 times, then the lithium-ion batteries were charged to 4.4V at a 4C rate again, then the anode was removed to observe the lithium deposition on the anode surface: wherein, the area of the lithium deposition region on the anode surface being less than 5% was considered as slight lithium deposition, the area of the lithium deposition region on the anode surface being 5% to 40% was considered as medium lithium deposition, and the area of the lithium deposition region on the anode surface being greater than 40% was considered as severe lithium deposition.

2. Cycle performance: at 25°C, the lithium-ion batteries prepared in examples and comparative examples were charged at an equivalent 3C rate, discharged at 1C rate, to perform a full charge and discharge (2.8V to 4.4V) cycle tests until the capacity of the lithium-ion battery reduced to 80% of the initial capacity, and the number of cycle times at this time was recorded.

Table 1 Parameters and performance test results of the lithium-ion batteries prepared in Examples 1-33 and Comparative Examples 1-2

| group | m/cap | Dv50 of anode active material graphite (μm) | DBP value of anode active material - graphite (mL/100g) | Anode compaction density (PD)/ g/cm³ | Capacity excess coefficient (CB) | Mass percentage of DTD (A) | Electrolyte viscosity (25°C) $(\eta)$/mPa·s | CB×PD/ $(\eta \times A)$ | Lithium deposition at 4C | 3C cycles |
|---|---|---|---|---|---|---|---|---|---|---|
| Example 1 | 3 | 10 | 60 | 1.65 | 1.13 | 2.00% | 4.00 | 23.3 | No lithium deposition | 1858 |
| Example 2 | 3 | 10 | 60 | 1.3 | 1.13 | 2.00% | 4.00 | 18.4 | No lithium deposition | 1630 |
| Example 3 | 3 | 10 | 60 | 1 | 1.13 | 2.00% | 4.00 | 14.1 | No lithium deposition | 1203 |
| Example 4 | 3 | 10 | 60 | 1.8 | 1.13 | 2.00% | 4.00 | 25.4 | No lithium deposition | 1628 |
| Example 5 | 3 | 10 | 60 | 2 | 1.13 | 2.00% | 4.00 | 28.3 | No lithium deposition | 1505 |
| Example 6 | 3 | 10 | 60 | 1.65 | 1.2 | 2.00% | 4.00 | 24.8 | No lithium deposition | 1743 |
| Example 7 | 3 | 10 | 60 | 1.65 | 1.4 | 2.00% | 4.00 | 28.9 | No lithium deposition | 1595 |
| Example 8 | 3 | 10 | 60 | 1.65 | 1.5 | 2.00% | 4.00 | 30.9 | No lithium deposition | 1581 |
| Example 9 | 3 | 10 | 60 | 1.65 | 1.6 | 2.00% | 4.00 | 33.0 | No lithium deposition | 1406 |
| Example 10 | 3 | 10 | 60 | 1.65 | 1 | 2.00% | 4.00 | 20.6 | Slight lithium deposition | 1203 |
| Example 11 | 3 | 10 | 60 | 1.65 | 1.13 | 0.50% | 4.00 | 93.2 | No lithium deposition | 1359 |
| Example 12 | 3 | 10 | 60 | 1.65 | 1.13 | 1.00% | 4.00 | 46.6 | No lithium deposition | 1474 |
| Example 13 | 3 | 10 | 60 | 1.65 | 1.13 | 1.50% | 4.00 | 31.1 | No lithium deposition | 1556 |

(continued)

| group | m/cap | Dv50 of anode active material graphite (μm) | DBP value of anode active material - graphite (mL/100g) | Anode compaction density (PD)/ g/cm³ | Capacity excess coefficient (CB) | Mass percentage of DTD (A) | Electrolyte viscosity (25°C) (η)/mPa·s | CB×PD/ (η×A) | Lithium deposition at 4C | 3C cycles |
|---|---|---|---|---|---|---|---|---|---|---|
| Example 14 | 3 | 10 | 60 | 1.65 | 1.13 | 2.50% | 4.00 | 18.6 | No lithium deposition | 1547 |
| Example 15 | 3 | 10 | 60 | 1.65 | 1.13 | 3.00% | 4.00 | 15.5 | No lithium deposition | 1443 |
| Example 16 | 3 | 10 | 60 | 1.65 | 1.13 | 2.00% | 3.00 | 31.1 | No lithium deposition | 1695 |
| Example 17 | 3 | 10 | 60 | 1.65 | 1.13 | 2.00% | 2.00 | 46.6 | No lithium deposition | 1572 |
| Example 18 | 3 | 10 | 60 | 1.65 | 1.13 | 2.00% | 5.00 | 18.6 | No lithium deposition | 1536 |
| Example 19 | 3 | 10 | 60 | 1 | 1 | 3.00% | 5.00 | 6.7 | Slight lithium deposition | 1201 |
| Example 20 | 3 | 10 | 60 | 2 | 1.6 | 1.00% | 2.00 | 160.0 | Slight lithium deposition | 1184 |
| Example 21 | 3 | 10 | 60 | 1.65 | 1.5 | 1.00% | 4.00 | 61.9 | No lithium deposition | 1325 |
| Example 22 | 3 | 10 | 40 | 1.65 | 1.13 | 2.00% | 4.00 | 23.3 | No lithium deposition | 1595 |
| Example 23 | 3 | 10 | 10 | 1.65 | 1.13 | 2.00% | 4.00 | 23.3 | Slight lithium deposition | 1349 |
| Example 24 | 3 | 10 | 80 | 1.65 | 1.13 | 2.00% | 4.00 | 23.3 | No lithium deposition | 1688 |
| Example 25 | 3 | 10 | 100 | 1.65 | 1.13 | 2.00% | 4.00 | 23.3 | Slight lithium deposition | 1476 |

(continued)

| group | m/cap | Dv50 of anode active material graphite (μm) | DBP value of anode active material - graphite (mL/100g) | Anode compaction density (PD)/g/cm³ | Capacity excess coefficient (CB) | Mass percentage of DTD (A) | Electrolyte viscosity (25°C) (η)/mPa·s | CB×PD/(η×A) | Lithium deposition at 4C | 3C cycles |
|---|---|---|---|---|---|---|---|---|---|---|
| Example 26 | 3 | 5 | 60 | 1.65 | 1.13 | 2.00% | 4.00 | 23.3 | No lithium deposition | 1536 |
| Example 27 | 3 | 15 | 60 | 1.65 | 1.13 | 2.00% | 4.00 | 23.3 | No lithium deposition | 1796 |
| Example 28 | 3 | 22 | 60 | 1.65 | 1.13 | 2.00% | 4.00 | 23.3 | No lithium deposition | 1853 |
| Example 29 | 3 | 30 | 60 | 1.65 | 1.13 | 2.00% | 4.00 | 23.3 | Slight lithium deposition | 1650 |
| Example 30 | 2 | 10 | 60 | 1.65 | 1.13 | 2.00% | 4.00 | 23.3 | No lithium deposition | 1766 |
| Example 31 | 1.5 | 10 | 60 | 1.65 | 1.13 | 2.00% | 4.00 | 23.3 | No lithium deposition | 1768 |
| Example 32 | 4 | 10 | 60 | 1.65 | 1.13 | 2.00% | 4.00 | 23.3 | No lithium deposition | 1796 |
| Example 33 | 5 | 10 | 60 | 1.65 | 1.13 | 2.00% | 4.00 | 23.3 | No lithium deposition | 1855 |
| Comparative Example 1 | 3 | 10 | 60 | 2.05 | 1.65 | 1.00% | 2.00 | 169.1 | Severe lithium deposition | 850 |
| Comparative Example 2 | 3 | 10 | 60 | 1.1 | 1.05 | 4.00% | 5.50 | 5.3 | Medium lithium deposition | 1021 |

Table 2 parameters and performance results of the lithium-ion batteries prepared in Examples 34-38

| | Anode compaction density (PD)/ g/cm$^3$ | Capacity excess coefficient (CB) | Mass percentage of DTD (A) | Mass percentage of TMSP | Electrolyte viscosity (25°C) ($\eta$)/mPa·s | CB×PD/ ($\eta$×A) | Lithium deposition at 4C | 3C cycles |
|---|---|---|---|---|---|---|---|---|
| Example 34 | 1.65 | 1.13 | 2.00% | 0.10% | 4.01 | 23.2 | No lithium deposition | 1896 |
| Example 35 | 1.65 | 1.13 | 2.00% | 0.30% | 4.02 | 23.2 | No lithium deposition | 1925 |
| Example 36 | 1.65 | 1.13 | 2.00% | 0.50% | 4.03 | 23.1 | No lithium deposition | 1981 |
| Example 37 | 1.65 | 1.13 | 2.00% | 0.80% | 4.05 | 23.0 | No lithium deposition | 1917 |
| Example 38 | 1.65 | 1.13 | 2.00% | 1.00% | 4.06 | 23.0 | No lithium deposition | 1872 |

The results of the above examples and comparative examples further indicate that when the lithium-ion secondary battery satisfies a relationship $6.7 \leq CB \times PD / (\eta \times A) \leq 160$, the lithium-ion secondary battery can simultaneously have fast charging and long cycle life. Moreover, as can be seen from Examples 34-38 that adding an appropriate amount of tri-(trimethylsilyl) phosphite can further improve the cycle performance.

Finally, it should be noted that the above embodiments are only used to illustrate the technical solution of this disclosure and do not limit the protection scope of this disclosure. Although the detailed description of this disclosure is provided with reference to the preferred embodiments, ordinary technicians in the field should understand that the technical solution of this disclosure can be modified or substituted without departing from the essence and scope of the technical solution.

**Claims**

1. A lithium-ion secondary battery, comprising a cathode, an anode, an electrolyte, and a separator, wherein the anode comprises an anode current collector and an anode active material layer arranged on at least one surface of the anode current collector; the electrolyte comprises an organic solvent, a lithium salt, and an additive; the additive comprises DTD;
the lithium-ion secondary battery satisfies a relationship as follows:

$$6.7 \leq CB \times PD/(\eta \times A) \leq 160,$$

wherein CB represents a capacity excess coefficient of the lithium-ion secondary battery, which is a ratio of an anode capacity to a cathode capacity under the same area;
A represents a mass percentage of the DTD in the electrolyte;
PD represents a compaction density of the anode active material layer in g/cm$^3$; and
$\eta$ represents a viscosity of the electrolyte at 25°C in mPa·s.

2. The lithium-ion secondary battery according to claim 1, wherein the lithium-ion secondary battery satisfies a relationship as follows: $14 \leq CB \times PD/(\eta \times A) \leq 62$.

3. The lithium-ion secondary battery according to claim 1, wherein the CB is 1 to 1.6.

4. The lithium-ion secondary battery according to claim 1, wherein the A is 0.5% to 3%.

5. The lithium-ion secondary battery according to claim 1, wherein the PD is 1 g/cm$^3$ to 2 g/cm$^3$.

6. The lithium-ion secondary battery according to claim 1, wherein the $\eta$ is 2 mPa·s to 5 mPa·s.

7. The lithium-ion secondary battery according to any one of claims 1 to 6, wherein an anode active material in the anode active material layer satisfies one or more of the followings:

(1) the anode active material comprises at least one of graphite, soft carbon, hard carbon, a silicon-based material, a tin-based material, or lithium titanate;
(2) $D_{V50}$ of the anode active material is 5 $\mu$m to 30 $\mu$m, and $D_{V50}$ is a particle size at which a cumulative volume distribution percentage of the anode active material reaches 50%;
(3) an oil absorption value of the anode active material is 10 mL/100g to 100 mL/100g.

8. The lithium-ion secondary battery according to any one of claims 1 to 6, wherein a total mass m of the electrolyte in the lithium-ion secondary battery and a rated capacity cap of the lithium-ion secondary battery satisfy: m/cap = 1.5 g/Ah to 5 g/Ah.

9. The lithium-ion secondary battery according to any one of claims 1 to 6, wherein the electrolyte satisfies one or more of the followings:

(1) the organic solvent comprises at least one of cyclic carbonate, linear carbonate, or carboxylic ester;
(2) the lithium salt comprises at least one of lithium hexafluorophosphate, lithium bis(fluorosulfonyl)imide, lithium bis(oxalate)borate, lithium difluoroborate, or lithium tetrafluoro(oxalato)borate;
(3) the additive further comprises at least one of vinylene carbonate, 1,3-propanesultone, fluoroethylene carbonate, tris(trimethylsilyl) phosphate, or lithium difluorophosphate.

10. The lithium-ion secondary battery according to claim 9, wherein the additive further comprises tris(trimethylsilyl) phosphate.

11. The lithium-ion secondary battery according to any one of claims 1 to 6, wherein a cathode active material in the cathode comprises at least one of lithium iron phosphate, lithium manganese iron phosphate, lithium nickel cobalt manganese oxide, lithium nickel cobalt aluminum oxide, lithium nickel manganese oxide, lithium cobalt oxide, lithium-rich manganese-based solid solution, or lithium manganese oxide.

12. An electrical apparatus, comprising the lithium-ion secondary battery according to any one of claims 1 to 11.

## INTERNATIONAL SEARCH REPORT

| International application No. |
| --- |
| **PCT/CN2023/141923** |

**A. CLASSIFICATION OF SUBJECT MATTER**

H01M10/0567(2010.01)i; H01M10/0525(2010.01)i; H01M10/42(2006.01)i

According to International Patent Classification (IPC) or to both national classification and IPC

**B. FIELDS SEARCHED**

Minimum documentation searched (classification system followed by classification symbols)

IPC: H01M10/-

Documentation searched other than minimum documentation to the extent that such documents are included in the fields searched

Electronic data base consulted during the international search (name of data base and, where practicable, search terms used)

CNTXT, ENTXTC, DWPI, VEN, CNKI, ISI_Web of Science: 电池, 负极, 正极, 阳极, 阴极, 容量, 压实密度, 电解液, 粘度, battery, positive electrode, electrolyte, negative electrode, coefficient , CB, compacted density, PD, viscosity

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116936931 A (SUNWODA POWER TECHNOLOGY CO., LTD.) 24 October 2023 (2023-10-24) <br> claims 1-10, and description, paragraphs 20 and 51 | 1-12 |
| A | CN 114759157 A (SUNWODA ELECTRIC VEHICLE BATTERY CO., LTD.) 15 July 2022 (2022-07-15) <br> description, paragraphs 77-105, and embodiment 1 | 1-12 |
| A | CN 115275367 A (BYD CO., LTD.) 01 November 2022 (2022-11-01) <br> entire document | 1-12 |
| A | CN 115295756 A (ZHUHAI COSMX BATTERY CO., LTD.) 04 November 2022 (2022-11-04) <br> entire document | 1-12 |
| A | WO 2023104038 A1 (SHENZHEN CAPCHEM TECHNOLOGY CO., LTD.) 15 June 2023 (2023-06-15) <br> entire document | 1-12 |
| A | WO 2016202169 A2 (TIAN DONG) 22 December 2016 (2016-12-22) <br> entire document | 1-12 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **23 March 2024** | **29 March 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/141923**

| Patent document cited in search report | | | Publication date (day/month/year) | Patent family member(s) | Publication date (day/month/year) |
|---|---|---|---|---|---|
| CN | 116936931 | A | 24 October 2023 | None | |
| CN | 114759157 | A | 15 July 2022 | None | |
| CN | 115275367 | A | 01 November 2022 | None | |
| CN | 115295756 | A | 04 November 2022 | None | |
| WO | 2023104038 | A1 | 15 June 2023 | None | |
| WO | 2016202169 | A2 | 22 December 2016 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310791633